# EUROPÄISCHE PATENTSCHRIFT

(11) **EP 2 099 840 B1**
(45) Veröffentlichungstag und Bekanntmachung des Hinweises auf die Patenterteilung: **09.11.2011**
(21) Anmeldenummer: 07856300.4
(22) Anmeldetag: 29.11.2007
(51) Int. Cl.: C08G 18/22, C08G 18/70, C08G 18/79, C08G 18/50, C08G 18/10, C08G 18/12

(54) **KLEBSTOFFE**
ADHESIVES
ADHÉSIFS

(30) Priorität: 12.12.2006 DE 102006058527
(43) Veröffentlichungstag der Anmeldung: 16.09.2009
(73) Patentinhaber: Bayer MaterialScience AG, 51368 Leverkusen (DE)
(72) Erfinder: BÜCHNER, Jörg, 51467 Bergisch Gladbach (DE); GÜRTLER, Christoph, 50676 Köln (DE); PIRES, Raul, 50670 Köln (DE); HENNING, Wolfgang, 51515 Kürten (DE); ARNDT, Wolfgang, 41542 Dormagen (DE)
(86) Internationale Anmeldenummer: PCT/EP2007/010345
(87) Internationale Veröffentlichungsnummer: WO 2008/071307

(56) Entgegenhaltungen:
- EP-A- 0 922 720
- EP-A- 1 172 390
- WO-A-03/016374
- DE-A1- 10 308 106

## Beschreibung

Die Erfindung betrifft Klebstoffe auf der Basis wässriger Dispersionen und oberflächendeaktivierter Isocyanat-Partikel sowie aus solchen Dispersionen hergestellte latent-reaktive Beschichtungen, Filme und Pulver.

Polyurethan-Dispersionspolymere, welche lineare, bei Temperaturen unterhalb von 100°C kristallisierende Polymerketten besitzen, werden u.a. für wärmeaktivierte Verklebungen von temperaturempfindlichen Substraten eingesetzt. Bei 1-komponentiger Verarbeitung, d.h. ohne den Zusatz eines Vernetzers, werden aber nur niedrige, mit der Dekristallisationstemperatur oder Erweichungstemperatur des Polymers korrelierende Wärmebeständigkeiten erreicht. Außerdem ist die Hydrolysebeständigkeit bei 1-komponentiger Verarbeitung für viele Anwendungen unzureichend. Aus diesem Grund werden die wässrigen Dispersionspolymere üblicherweise unter Mitverwendung von flüssigen, hydrophil modifizierten Polyisocyanaten verarbeitet. Der Gewinn an verbesserten Eigenschaften wird jedoch mit einem höheren technischen Aufwand für die zweikomponentige Verarbeitung erkauft. Die Herstellung der zweikomponentigen Mischung muss unmittelbar vor der Verarbeitung der Dispersion erfolgen. Außerdem ist die zweikomponentige Verarbeitung hinsichtlich des Zusatzes der richtigen Menge Isocyanatkomponente und des homogenen Einrührens der Isocyanatkomponente fehleranfällig.

Die Topfzeit der zweikomponentigen Mischung beträgt, je nach Art der Polymerdispersion bzw. der Isocyanatkomponente 1 - 12 Std. Darüber hinaus müssen die getrockneten Klebstoffschichten innerhalb von ca. 1 - 12 h verarbeitet werden, da sonst - aufgrund der fortschreitenden Vernetzungsreaktion durch die Isocyanatgruppen - das Polymer nicht mehr unter den üblichen Bedingungen der wärmeinduzierten Verklebung verarbeitet werden kann.

Daraus resultiert ein weitere Nachteil dieser Arbeitsweise: Die Arbeitsschritte Applikation und Aushärtung, d.h. Auftrag der Klebstoff-Dispersion und wärmeinduzierte Vernetzung können zeitlich und räumlich nicht getrennt werden. Aus ökonomischer Sicht wäre diese Trennung jedoch für eine Vielzahl von Anwendungen zweckmäßig und wünschenswert.

Aus diesem Grund wurde in den letzten Jahren verstärkt an Dispersionsformulierungen mit festen feinteiligen Isocyanaten gearbeitet. Diese so genannten latent-reaktiven Dispersionsklebstoffe bestehen aus wenigstens einer Dispersion isocyanatreaktiver Polymere und Feststoff-Ioscyanat Partikeln. Wässrige Zubereitungen isocyanatreaktiver Polymerdispersionen mit feinteilig dispergierten oberflächendesaktivierten, Uretdiongruppen enthaltenden oligomeren Feststoff-Isocyanaten sowie deren Verwendung als latentreaktive Bindemittel für Beschichtungen sowie für Klebstoffe sind seit einigen Jahren bekannt.

Unter oberflächendeaktivierten Isocyanat-Partikeln sind solche Feststoff-Isocyanate zu verstehen, bei denen 0,1 - 25, bevorzugt 0,5 - 8 Equivalentprozent der gesamten in den Isocyanat-Partikeln vorhandenen Isocyanatgruppen mit einem Deaktivierungsmittel abreagiert sind. Die Deaktivierung der Isocyanat-Partikel kann u.a. durch die in EP-A 0 204 970, US 4,595,445 und DE 10140206 beschriebenen Deaktivierungsmittel erfolgen.

Die oberflächendeaktivierten Isocyanat-Partikel unterscheiden sich dabei grundsätzlich von den blockierten Isocyanaten. Bei den oberflächendeaktivierten Isocyanat-Partikeln liegen bevorzugt 92 - 99,5 Equivalentprozent der Isocyanatgruppen frei vor. Bei den blockierten Isocyanaten sind hingegen alle Isocyanatgruppen mit einem Blockierungsmittel abreagiert. Für die Vernetzungsreaktion müssen die Isocyanatgruppen des blockierten Isocyanats durch z.B. Rückspaltung des Blockierungsmittels erst freigesetzt werden. Bei den oberflächendeaktivierten Isocyanat-Partikeln ist die Deblockierungsreaktion der Isocyanatgruppen nicht notwendig.

In der EP-A 0 204 970 wird ein Verfahren zur Herstellung stabiler Dispersionen feinteiliger Polyisocyanate durch Behandlung der Polyisocyanate in einer Flüssigkeit mit Stabilisatoren und Einwirkung hoher Scherkräfte oder Mahlung beschrieben. Dazu sind solche Di- und Polyisocyanate geeignet, deren Schmelzpunkt oberhalb 10°C, vorzugsweise oberhalb 40°C liegt. Die beschriebenen Dispersionen werden als Vernetzer verwendet.

Die EP-A 1 172 390 offenbart lagerstabile Isocyanatdispersionen bestehend aus deaktivierten Isocyanaten und isocyanatreaktiven Polymeren, die nach dem Entfernen des Wassers bei Temperaturen zwischen 5°C und 40°C vernetzen. Die wässrigen Dispersionszubereitungen zeichnen sich durch eine gute Laberstabilität aus.

Der Nachteil der in dieser Publikation beschriebenen Arbeitsweise ist, dass die weitgehend trockenen Beschichtungen, Filme oder Pulver nicht lagerstabil sind. Die Vernetzungsreaktion beginnt mit dem Trocknen der Schichten. Die gewünschte räumliche und zeitliche Trennung der Verarbeitungsschritte Auftrag /Trocknung der Dispersionsschicht und Fügen der Verbunde kann mit dieser Arbeitsanweisung nicht erreicht werden.

Die EP-A 1 134 245 beschreibt lagerstabile Zubereitungen aus feinteiligen Di- und Polyisocyanat-Pulvern, die ohne Oberflächendeaktivierung direkt in die wässrigen isocyanatreaktiven Polymerdispersionen eingearbeitet werden können. Die Vernetzungsreaktion wird bei diesen Formulierungen durch Erwärmen der getrockneten Schicht auf eine Temperatur von wenigstens 65°C ausgelöst.

Der Nachteil der in dieser Dokumentation beschriebenen Arbeitsweise ist ebenfalls die Tatsache, dass auch aus diesen Formulierungen keine lagerstabilen latent-reaktiven Beschichtungen, Filme oder Pulver erhalten werden können. Die gewünschte räumliche und zeitliche Trennung der Verarbeitungsschritte Auftrag /Trocknung der Dispersionsschicht und das Fügen der Verbunde kann auch mit dieser Arbeitsanweisung nicht erreicht werden.

EP-A 0 922 720 offenbart die Verwendung wässriger Dispersionen, die wenigstens ein oberflächendeaktiviertes Polyisocyanat und wenigstens ein mit Isocyanat reaktives Polymer enthalten zur Herstellung bei Raumtemperatur lagerstabiler, latentreaktiver Schichten oder Pulver, die durch Erwärmung zur Vernetzung gebracht werden können.

Als Polyisocyanate können alle die aliphatischen, cyloaliphatischen, heterocyclische oder aromatische Isocyanate zur Anwendung kommen, die einen Schmelzpunkt oberhalb von 40°C aufweisen. Die Stabilität der Vorbeschichtungen, der Filme oder der Pulver sowie deren Reaktionsgeschwindigkeit bei der wärmeinduzierten Vernetzung kann durch die Art des Isocyanats, durch die Menge des Oberflächenstabilisators, durch die Löslichkeitsparameter des Dispersionspolymers sowie durch Katalysatoren beeinflusst werden.

Als Katalysatoren werden die typischen Polyurethankatalysatoren wie Zinn-, Eisen-, Blei-, Kobalt-, Wismuth-, Antimon- und Zink-Verbindungen oder ihre Mischungen, Alkylmercaptid-Verbindungen des Dibutylzinns sowie tertiäre Amine genannt.

Nach EP-A 0 922 720 sind somit lagerstabile latent-reaktive Beschichtungen, Filme und Pulver möglich. Die gewünschte zeitliche und räumliche Trennung des Klebstoffauftrags und des Fügeprozesses sind somit prinzipiell möglich.

Werden jedoch aromatische Feststoff-Isocyanate als Feststoff-Isocyanat eingesetzt, dann kommt es, bedingt durch die Einwirkung des langwelligen UV-Anteils im Sonnenlicht, mit zunehmenden Alter der Klebeverbindung zur Vergilbung der Klebstoffschicht (Kunststoff Handbuch 7, 605-608 (1993))

Diese Vergilbung ist bei Verbunden, bei denen die Klebstoffschicht sichtbar ist (z.B. Klebungen von Papier / Folien-Verbunde für Sicherheitsdokumente), oder bei denen die Klebstoffschicht nicht vollständig durch die Substrate abgedeckt ist (z.B. der Sohlenklebung bei der Sportschuhfertigung) unerwünscht.

Da aliphatische Isocyanate bzw. Polyurethane auf Basis aliphatischer Isocyanate den kurzwelligen UV-Anteil des Sonnenlichts nicht absorbieren, sind diese Polyurethane prinzipiell vor Vergilbung geschützt. Für Anwendungen, bei denen es auf eine nicht-verfärbende latent-reaktive Beschichtungen, latent-reaktive Filme oder latent-reaktive Pulver ankommt, ist daher der Einsatz oberflächendeaktivierter aliphatischer Feststoff-Isocyanate besonders vorteilhaft.

Ein Nachteil der aliphatischen Isocyanate ist aber die bekanntermaßen geringere Reaktivität im Vergleich zu den aromatisch gebundenen Isocyanatgruppen. Dies ist beispielsweise aus Ullmann's Encyclopedia of Industrial Chemistry, Sixth Edition, Vol. 18, S. 609, Wiley-VCH Verlag, 2002, Isocyanantes, Organic, bekannt. Aus diesem Grund haben sich bis heute auch noch keine Anwendungen von latent-reaktiven Beschichtungen, Filmen oder Pulvern auf Basis deaktivierter aliphatischer Feststoff-Isocyanate etablieren können. So liegt die relative Reaktivität der freien Isocyanatgruppe des Isocyanurats aus dem Isophorondiisocyanat (IPDI) gegenüber OH-Gruppen um einen Faktor von ca. 50 niedriger als die Reaktivität der freien Isocyanatgruppen des aromatischen 1-Methyl-2,4-phenylen-diisocyanats (TDI-Dimer) gegenüber OH-Gruppen.

Latent-reaktive Beschichtungen, Filme oder Pulver nach EP-A 0 922 720, die ein deaktiviertes aliphatisches Feststoff-Isocyanat als Vernetzerkomponente enthalten, benötigen zur Vernetzung des isocyanatreaktiven Polymers entweder
a) eine sehr lange Verweilzeit bei hohen Temperaturen, um die Vernetzungsreaktion soweit zu führen, bis eine ausreichende Vernetzungsdichte erreicht ist, oder
b) einen Katalysator, der die Reaktion zwischen den aliphatischen Isocyanat-Gruppen und dem isocyanatreaktiven Polymer so beschleunigt, dass die Vernetzungsreaktion auch nach kurzer Wärmeeinwirkung bis zur gewünschten Vernetzungsdichte abläuft.

Ohne Katalysator läuft die Vernetzungsreaktion in diesen lagerstabilen latent-reaktiven Schichten, Filmen oder Pulvern so langsam ab, dass die wirtschaftliche Nutzung dieser Technologie nicht möglich ist. So muss eine unter Verwendung des aliphatischen IPDI-Trimers als Feststoff-Isocyanat hergestellte latent-reaktive Folie während wenigstens 30 min. bei 120°C gehalten werden, um eine hinreichend hohe Vernetzungsdichte im Klebverbund zu erreichen.

Die in EP-A 0 922 720 aufgeführten Katalysatoren (Zinn-, Eisen-, Blei-, Kobalt-, Wismuth-, Antimon-, Zink-Verbindungen oder ihre Mischungen, Alkylmercaptid-Verbindungen des Dibutylzinns sowie tertiäre Amine) sind typische, für Isocyanatreaktionen verwendete Katalysatoren. Im einzelnen besitzen diese Katalysatoren hinsichtlich ihrer Verwendung bei der Herstellung latentreaktiver Beschichtungen, latent-reaktiver Filme oder latent-reaktiver Pulver jedoch Nachteile, die ihren Einsatz unmöglich machen.

So sind die organischen Zn(IV)-Verbindungen wie z.B. DBTL im allgemeinen mit Dibutylzinn bzw. Tributlyzinn kontaminiert, wie aus "Assessment of the risk to health and environment posed the use of organostannic compounds (excluding use as biocide in antifouling paints) and a description of the economic profile of the industry, Final report 19 July 2002, European Commission Health & Consumer Protection Directorate-General" bekannt ist. Auch aus ökologischer Sicht ist der Einsatz von Zn(IV)-Verbindungen nicht wünschenswert. Außerdem katalysieren die organischen Zn(IV)-Verbindungen neben der Reaktion der Isocyanate auch die Hydrolyse der Polyestersegmente der Polyesterpolyurethan-Polymerkette, wie sie für die isocyanatreaktiven Dispersionspolymere in latent-reaktiven Schichten zur Anwendung kommen. Aus diesem Grund sind organische Zn(IV)-Verbindungen für die Katalyse der Reaktion oberflächendeaktivierter aliphatischer Feststoff-Isocyanate mit kristallinen isocyanatreaktiven Polyurethan-Dispersionspolymeren auf Basis Polyesterpolyol nicht einsetzbar.

Weiterhin haben Katalysatoren des Stands der Technik in aller Regel nur eine endliche Lebensdauer in wässrigen Systemen, d.h. der Katalysator wird durch die Wassereinwirkung mehr oder minder rasch hydrolysiert. Diese gilt für die wässrige Zubereitung aus oberflächendeaktivierten aliphatischen Feststoff-Isocyanaten und isocyanatreaktiven dispergierten Polymeren wie auch für die weitgehend trockenen latent-reaktiven Beschichtungen, die in der Regel noch eine Restfeuchte von ca. 0,6 - 1,0 Gew. % Wasser bezogen auf das Gewicht der Beschichtung besitzen. Dies gilt in besonderem Masse für die in konventionellen Systemen gerne verwendeten Zinn(IV)-Verbindungen wie das bereits genannte DBTL oder auch für Wismuthcarboxylate wie z.B. Wismuth(III)-2-ethylhexanoat (K-Kat, King Industries, Norwalk, CT, USA), wie es auch in WO 00/047642 beschrieben ist.

Für die Anwendung in farblosen Klebstoffschichten können natürlich auch keine farbigen oder verfärbenden Katalysatoren zur Einsatz kommen. Deshalb können die die in EP-A 0 992 720 genannten Eisen-, Kobalt- oder Wismuth-Katalysatoren für nicht-verfärbende Klebstoffschichten nicht eingesetzt werden.

Die Blei- und Antimon-Verbindungen sind aufgrund ihrer Toxikologie und ihren umweltschädlichen Wirkung ebenfalls nicht vorteilhaft und sollten daher grundsätzlich nicht zur Anwendung kommen.

Ein weiteres Problem für die Katalyse der Reaktion zwischen oberflächendeaktivierten Feststoff-Isocyanat und isocyanatreaktiven Dispersionspolymer stellen die zur Hydrophilierung der Polymerkette des Dispersionspolymer erforderlichen ionischen Gruppen dar. Die Hydrophilierung kann durch in die Polymerkette eingebaute Carboxylgruppen erreicht werden. Diese Carboxylgruppen können unter Umständen durch eine Komplexbildung zu einer Inhibierung der katalytischen Aktivität von zinnorganischen Verbindungen führen. Dies gilt für alle hoch geladenen Lewis-Säuren wie z.B. Titan(IV)-, Zirkon(IV)- Verbindungen. Ein Katalysator, der universell mit einer Vielzahl von oberflächendeaktivierten aliphatischen Feststoff-Isocyanaten, Polyisocyanaten und hydrophilierten Bindemitteln verwendbar sein soll, darf diese Wechselwirkungen mit den Hydrophilierungsmitteln nicht zeigen.

In der EP-A 1 599 525 werden Katalysatoren zur beschleunigten Aushärtung von Polyisocyanaten mit Polyolen und diese enthaltenden Polyurethansystemen beschrieben.

Die (Poly)-isocyanatkomponenten, die nach dieser Lehre zur Anwendung kommen können, sind beliebige organische Polyisocyanate mit aliphatischen, cycloaliphatischen, araliphatischen und/- oder aromatisch gebundenen, freien Isocyanatgruppen, die bei Raumtemperatur flüssig sind oder zu diesem Zweck mit Lösemittel verdünnt sind. Die (Poly)-isocyanatkomponente weist bei 23°C eine Viskosität von 10 - 15000 mPas auf.

Speziell bezieht sich die Erfindung auf Katalysatoren zur beschleunigten Aushärtung von Polyisocyanaten mit Polyolen in Gegenwart des Lösungsmittels Wasser (so genannte wässrige zweikomponentige Polyurethanlacke, 2K-PUR Wasserlacke). Aufgabe dieser Erfindung war, es Katalysatoren zu finden, die die Reaktion zwischen dem Isocyanat und dem Alkohol bzw. dem Polyol in Gegenwart von Wasser beschleunigen bzw. die Aushärtung von wässrigen 2K-PUR-Systemen beschleunigen, ohne dabei einen Einfluss auf die Topfzeit zu haben. Diese Aufgabe wird durch den Einsatz verschiedener Salze von Elementen der 5. und 6. (Neben)gruppe des Periodensystems, in denen das jeweilige Element eine Oxidationsstufe von mindestens + 4 hat, gelöst.

Neben den Metallkatalysatoren werden in EP-A 0 992 720 auch tert.-Amine als wirksame Katalysatoren aufgeführt. Wie aber bereits in EP-A 0 992 720 beschrieben, verlieren die tert.-Amine durch Absorption von Kohlendioxid aus der Luft ihre Wirksamkeit. Für die latent-reaktiven Beschichtungen, Filme oder Pulver ist diese Tatsache besonders unerwünscht, weil gerade die Lagerstabilität der Beschichtungen, Filme oder Pulver auch in Hinblick auf die Vemetzungsgeschwindigkeit unerlässlich für den Einsatz der latent-reaktiven Schichten ist.

Der vorliegenden Erfindung lag daher die Aufgabe zugrunde, Zubereitungen wässriger Dispersionen oder Dispersionsmischungen isocyanatreaktiver Polymere und oberflächendeaktivierter aliphatischer Feststoff-Isocyanat-Partikel und Katalysator bereitzustellen, mit denen farblose und farbstabile, lagerstabile latent-reaktive Beschichtungen, latent-reaktive Filme und latent-reaktive Pulver erzeugt werden können. Die Katalysatoren sollen auch in Hinblick auf ihre toxikologischen Eigenschaften positiv bewertet sein. Die Vernetzungsreaktion in den Beschichtungen, Filmen oder Pulvern soll in anwendungstechnisch akzeptabler Zeit der Wärmeaktivierung erreicht werden.

Diese Aufgabe wird durch die Lehre der vorliegenden Anmeldung gelöst: Überraschend wurde gefunden, dass Verbindungen der Elemente der 5. und 6. Nebengruppe des Periodensystems, in denen das jeweilige Element eine Oxidationsstufe von mindestens + 4 besitzt, die Reaktion zwischen oberflächendeaktivierten Feststoff-Isocyanat und isocyanatreaktiven Polymer so katalysieren, dass die Vernetzungsreaktion bei Temperaturen ≤ 120°C abläuft und innerhalb von max. 10 Minuten weitgehend abgeschlossen ist. Außerdem wird durch den Einsatz der erfindungsgemäßen Katalysatoren eine Lagerstabilität der latent-reaktiven Beschichtungen, Filme/Vliese oder Pulver von wenigstens 3 Monaten erreicht.

Erfindungsgemäße Zubereitungen sind daher Mischungen aus:
a) einer wässrigen Dispersion oder Dispersionsmischung wenigstens eines Polymers mit gegenüber Isocyanaten reaktiven Gruppen
b) eines wenigstens im wesentlichen in Wasser suspendierten oberflächendeaktivierten, feinteiligen aliphatischen Feststoff-Polyisocyanats
c) wenigstens einer Verbindung von Elementen der 5. und 6. Nebengruppe des Periodensystems, in der das jeweilige Element eine Oxidationsstufe von mindestens + 4 hat und
d) gegebenenfalls weiteren Zusatzstoffen und Hilfsmitteln.

Die erfindungsgemäßen latent-reaktiven wässrigen Zubereitungen können auf beliebige Weise, z.B. im Sprüh-, Rakel-, Pinsel-, oder Walzen-Auftragsverfahren auf flächige oder dreidimensionale Oberflächen appliziert werden. Nach dem Trocknen erhält man latent-reaktive (Vor)beschichtungen.

Sie können auch auf Trennpapier (z. B. Silikonpapier oder polyolefinisch antihaftend ausgerüsteten Papier oder ähnlichen Trägermaterialien) im Sprüh-, Rakel-, Pinsel-, oder Walzen-Auftragsverfahren aufgetragen werden. Nach dem Trocknen erhält man selbsttragende latent-reaktive Filme oder Vliese, die ggf. nach Einlegen eines Trennpapiers, aufgewickelt und bis zum Einsatz als Klebstoff-Film gelagert werden können.

Aus den erfindungsgemäßen Zubereitungen können durch geeignete technische Verfahren die Feststoffe in Form von Granuta oder Pulver gewonnen werden.

Die wässrigen Dispersionen für die erfindungsgemäßen Zubereitungen enthalten vorzugsweise als isocyanatreaktives Dispersionspolymer Polyurethan- bzw. Polyharnstoffdispersionen mit kristallinen Polyesterweichsegmenten. Besonders bevorzugt sind Dispersionen isocyanatreaktiver Polyurethanpolymere aus kristallinen Polymerketten, die bei Messung mittels thermomechanischer Analyse bei Temperaturen zwischen 50°C und 120°C zumindest partiell dekristallisieren.

Feststoff-Isocyanate sind alle aliphatischen und cycloaliphatischen Di- und Polyisocyanate, die eine Erweichungstemperatur ≥ 40°C besitzen. Insbesondere Dimerisierungs- und Trimerisierungsprodukte des Isophorondiisocyanat (Desmodur^{®} **I**, Bayer MaterialScience AG, Leverkusen), Bis-(4-isocyanatocyclohexyl)-methan (Desmodur^{®} W, Bayer MaterialScience AG, Leverkusen), ω,ω'-Diisocyanato-1,3-dimethylcyclohexan (H6XDI) sowie Mischungen dieser Dimerisiserunsgprodukte und Trimerisierungsprodukte sowie Mischtrimerisate aus Desmodur^{®} I / Desmodur^{®} W, Desmodur^{®} I / Desmodur^{®} H (Desmodur^{®} H = Hexamethylendiisocyanat) Desmodur^{®} W / Desmodur ^{®}H**,** Desmodur W / H6XDI, Desmodur^{®} **I** / H6XDI sind erfindungsgemäß einsetzbar.

Die erfindungsgemäßen aliphatischen Feststoff-Isocyanate müssen vor der Verwendung mit geeigenen Mahlverfahren z.B. in Kugel-, Perl-, Sandmühlen, Scheibenmühlen oder Strahlmühlen auf die Partikelgrößen d50 < 100pm bevorzugt d50 < 10µm und besonders bevorzugt d50 < 2µm gemahlen werden.

Die suspendierten oberflächendeaktivierten Isocyanate können nach den aus EP-A 0 992 720 und EP-A 1 172 390 bekannten Verfahren hergestellt werden.

Als Katalysatoren können erfindungsgemäß allgemein chemische Verbindungen von Elementen der 5. und 6. Nebengruppe des Periodensystems, in denen das jeweilige Element eine Oxidationsstufe von mindestens + 4 hat, eingesetzt werden. Vorzugsweise werden Salze dieser Elemente eingesetzt, in denen diese die genannten Oxidationsstufen haben. Als geeignet haben sich insbesondere Verbindungen der Elemente Vanadin, Niob, Tantal, Molybdän und Wolfram erwiesen, die daher bevorzugt eingesetzt werden. Derartige Verbindungen der Elemente Vanadin, Tantal, Molybdän und Wolfram sind beispielsweise Salze der Molybdänsäure wie die Alkalimetallsalze der Molybdänsäure sowie die Alkalimetallsalze der Vanadiumsäure sowie Tetraethylphosphoniummolybdat, Magnesiummolybdat, Calciummolydat, Zinkmolybdat, Lithiumwolframat, Kaliumwolframat, Wolframsäure, Ammoniumwolframat, Phosphorwolframsäure, Natriumniobat und Natriumtantalat. Besonders bevorzugt sind die Alkalisalze des Vanadiums und des Molybdäns.

Die verwendeten Katalysatormengen liegen, bezogen auf die getrocknete (Vor)beschichtung, den getrockneten Film bzw. das getrocknete Pulver bei 10 - 50000 ppm, wobei die Wirksamkeit des Katalysators nicht von der Art der Zugabe abhängt. Das bedeutet, der Katyalsator kann
- der wässrigen Polymerdispersionen zugesetzt werden
- bei der Herstellung Oberflächendeaktivierung des aliphatischen Feststoff-Isocyanats zugegeben werden, oder
- der Formulierung bestehend aus Polymerdispersion, oberflächendeaktivierten Feststoff-Isocyanat sowie ggf. weiteren Additiven und Hilfsstoffen zugesetzt werden.

Neben der effektiven Katalyse zeichnen sich die erfindungsgemäß eingesetzten Katalysatoren auch durch eine gewisse Latenzphase (verzögertes Einsetzten der katalytischen Wirkung) bei der Wärmeaktivierung aus. Dieser für latent-reaktive (Vor)beschichtungen, Filme, Vliese oder Pulver vorteilhafte Effekt stellt sicher, dass der Katalysator keinen Einfluss auf die Lagerstabilität der latent-reaktiven Schichten, Filme Vliese oder Pulver nehmen kann.

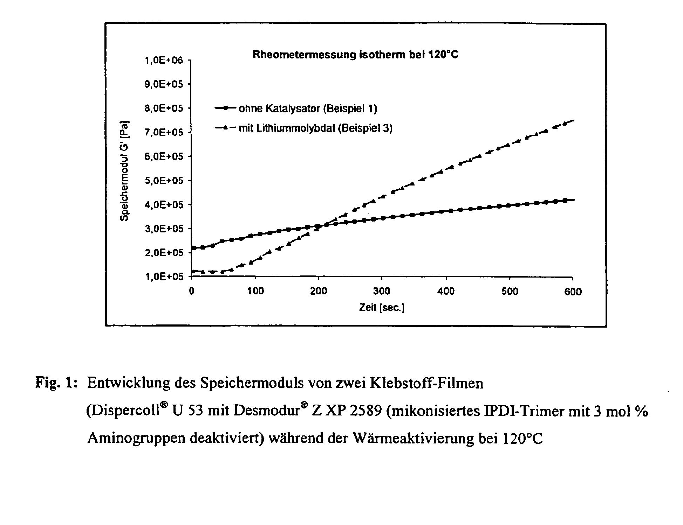

Das Diagramm in Fig. 1 zeigt exemplarisch dieses Phänomen anhand der Entwicklung des Speichermoduls von zwei Klebstoff-Filmen (Dispercoll^{®} U 53 mit Desmodur^{®} Z XP 2589 (mikonisiertes IPDI-Trimer mit 3 mol % Aminogruppen deaktiviert) während der Wärmeaktivierung bei 120°C.

Bei dem latent-reaktiven Klebstoff-Film ohne Katalysator (hergestellt aus Dispersion 1, Vergleichsbeispiel) steigt der Speichermodul unmittelbar mit Beginn der Wärmeaktivierung leicht an. Der mit Lithiummolybdat katalysierte latent-reaktive Klebstoff-Film (hergestellt aus Dispersion 3, erfindergemäßes Beispiel) zeigt unter den gleichen Bedingungen zunächst keine Änderung des Speichermoduls. Erst nach ca. 50 sec. wird der katalytische Effekt des Lithiummolybdats sichtbar. Der Speichermodul steigt dann deutlich schneller als bei dem latent-reaktiven Klebstoff-Film ohne Katalysator.

Die Vernetzungsreaktion wird in den aus den erfindingsgemäßen Zubereitungen hergestellten latent-reaktiven (Vor)beschichtungen, Filme, Vliese oder Pulver durch Wärmezufuhr ausgelöst. Die Vorbeschichtung, der Film, das Vlies oder das Pulver muss entweder auf eine Temperatur oberhalb der Dekristallisationstemperatur des Polymers oder auf eine Temperatur oberhalb der Erweichungstemperatur des deaktivierten aliphatischen Feststoff-Isocyanats (Schmelztemperatur oder Glasübergangstemperatur) erwärmt werden.

### Klebstoff-Applikation / Fügeverfahren

Die (Vor)beschichtung, der Klebstoff-Film, das Klebstoff-Vlies oder das Klebstoff-Pulver können auf eine Oberfläche der zu fügenden Substrate aufgetragen, aufgelegt oder ausgestreut werden (einseitiger Auftrag), oder auf beide zu fügenden Substratoberflächen aufgetragen, aufgelegt oder aufgestreut werden (zweiseitiger Auftrag). Die für den jeweiligen Anwendungsfall optimale Vorgehensweise (einseitiger oder beidseitiger Auftrag) ist dabei u.a. abhängig von dem Benetzungsverhalten der Substratoberflächen bei der Wärmeaktivierung mit der thermoplastisch erweichten Klebstoffschicht und kann vom Fachmann auf diesem technischen Gebiet im Rahmen seiner Routinetätigkeit ohne weiteres ermittelt werden.

Prinzipiell stehen für die Herstellung der Klebeverbindung folgende Verfahren zur Verfügung:
1. Kurzzeitige Wärmeaktivierung der Klebstoffschicht und Auslösen der Vernetzungsreaktion:
   Die latent-reaktive Beschichtung, der latent-reaktive Film, das latent-reaktive Vlies oder das latent-reaktive Pulver werden durch kurzzeitige Wärmeaktivierung z.B. in einem Heizkanal, mittels IR-Strahlen oder durch Bestrahlung mit Mirkowellen auf eine Temperatur oberhalb der Dekristallisationstemperatur des Polymers oder der Erweichungstemperatur des Feststoff-Isocyanats erwärmt. Unmittelbar danach erfolgt das Fügen der Substratoberflächen unter Druck. Die Vernetzungsreaktion wird hierbei durch die kurzzeitige Wärmeaktivierung nur gestartet. Die endgültigen Eigenschaften der vernetzten Klebstoffschicht werden nach 1 - 5 Tagen erreicht.
   Der Vorteil dieser Arbeitsweise liegt in dem kurzem Prozessschritt für den Fügevorgang und den rel. niedrigen Temperaturen bei der Wärmeaktivierung. Dies ist insbesondere dann von Interesse, wenn temperaturempfindliche Substrate verklebt werden sollen.
2. Länger andauernde Wärmeaktivierung bis zum Erreichen der Endeigenschaften der Klebeverbindung:
   Die latent-reaktive Beschichtung, der latent-reaktive Film, das latent-reaktive Vlies oder das latent-reaktive Pulver befinden sich zwischen den zu verklebenden Substraten. Die Substrate werden bei einer Temperaturen oberhalb der der Dekristallisationstemperatur des Polymers bzw. oberhalb der Erweichungstemperatur des aliphatischen Feststoff-Isocyanats über einen längeren Zeitraum verpresst. Auf diese Weise können die Endeigenschaften der Klebeverbindung unmittelbar nach dem Fügeprozess erreicht werden.
   Der Vorteil dieser Arbeitsweise liegt in der Möglichkeit der schnellen Weiterverarbeitung der Klebeverbindung bzw. in der Möglichkeit unmittelbar nach dem Fügeprozess eine Qualitätsprüfung durchführen zu können.
3. Kombination aus kurzzeitiger Wärmeaktivierung z.B. zur Fixierung der Fügeteile und länger andauernder Wäremaktivierung zur endgültigen Vernetzung.
   Der Vorteil dieser Arbeitsweise liegt in der Möglichkeit, die Substrate in einem kurzen Fügeprozess miteinander zu verbinden Die endgültige Vernetzung erfolgt dann in einem zweiten Schritt, welcher sowohl räumlich als auch zeitlich von ersten Fügeprozess getrennt sein kann.

### Beispiele

### Rohstoffe

### • Isocyanatreaktive Polymerdispersion

Dispercoll^{®} U 53, Polyurethandispersion der Bayer MaterialScience AG, 51368 Leverkusen; Feststoffgehalt ca. 40 Gew.-%.; Isocyanat-reaktives Polymer aus linearen Polyurethanketten auf Basis eines Adipinsäure / Butandiol-Polyesters mit HDI / IPDI als Isocyanatkomponente. Das Polymer kristallisiert nach dem Trocknen der Dispersion und Abkühlen des Films auf 23°C. Bei Messung mittels thermomechanischer Analyse ist der Film bei Temperaturen ≥ + 65°C weitgehend dekristallisiert.

### • Aliphatisches Feststoff-Isocyanat

Desmodur^{®} Z XP 2589; mikronisiertes IPDI-Trimer; Hersteller: Bayer MaterialScience AG, 51368 Leverkusen; NCO-Gehalt ca. 17%, Partikelgröße d50 ca. 1,5µm, Tg ca. 65°C.

### • Desaktivierungsamin

Jeffamine^{®} T 403; 3-funktionelles Polyetheramin, MW = ca. 450, Hersteller: Huntsman Corp., Utah, USA.

### • Hilfsstoffe:

Tamol^{®} NN 4501 (45 %-ig in Wasser) Schutzkolloid; Hersteller: BASF AG, 67056 Ludwigshafen

Borchigel^{®} ALA; Verdickungsmittel; Hersteller: Borchers GmbH, D-40765 Monheim.

Emulgator FD, nicht-ionischer Emulgator, Hersteller: Lanxess AG, Leverkusen

Formulierungen der oberflächendeaktivierten Feststoff-Isocyanate (Vernetzer):

### Vergleichsbeispiele (Vernetzer 1 und 2)

Entionisiertes Wasser, Emulgatoren, Deaktivierungsamin, Verdicker und Feststoff-Isocyanat werden vorgelegt und mit einer Dissolverscheibe bei 2000 rpm innnerhalb von 15 min. zu einer homogene Suspension vermischt.

### Erfindungsgemäße Beispiele (Vernetzer 3 -6)

Der Katalysator wird zunächst in entionisiertes Wasser gelöst. Anschließend werden die Emulgatoren, das Deaktivierungsamin, der Verdicker und das Feststoff-Isocyanat zugegeben und mit einer Dissolverscheibe bei 2000 rpm innnerhalb von 15 min. zu einer homogene Suspension vermischt.

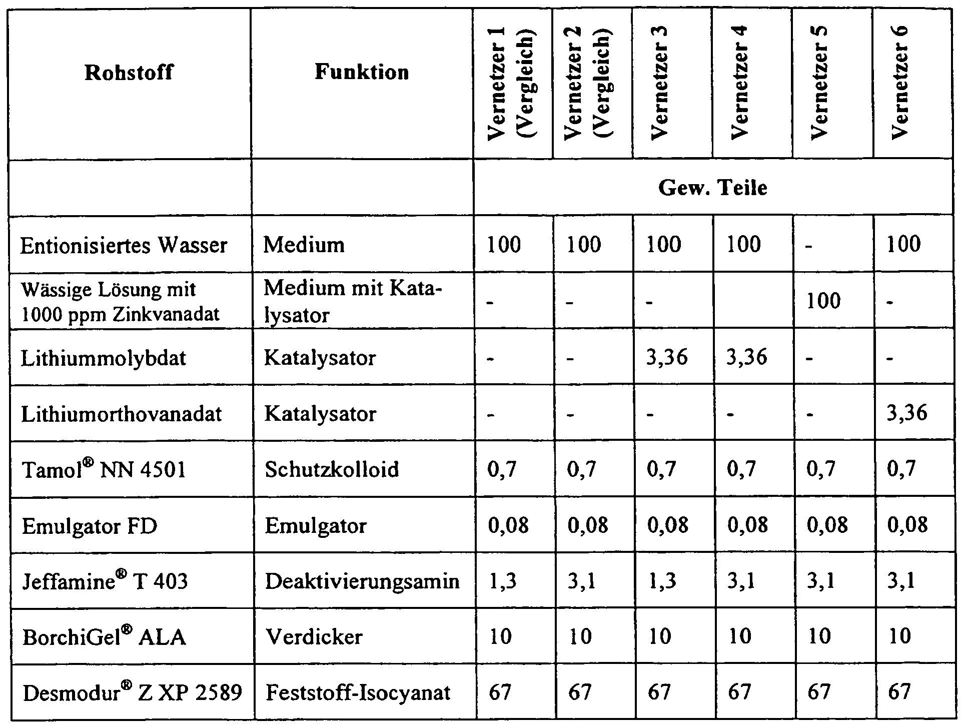

Vernetzer 1 und 3 enthalten zur Deaktivierung des Feststoff-Isocyanats 3 mol% Aminogruppen bezogen auf alle verfügbaren NCO-Gruppen des IPDI-Trimers. Die Deaktivierung des IPDI-Trimers der Formulierungen 2, 4,5 und 6 wurden mit 7 mol% Aminogruppen bezogen auf die verfügbaren NCO-Gruppen des IPDI-Trimers durchgeführt.

### Polymerdispersionen mit oberflächendeaktivierten Feststoff-Isocyanat-Partikeln:

Die Polymerdispersion werden vorgelegt. Unter Rühren wird die Formulierungen der oberflächendeaktivierten Feststoff-Isocyanate zugegeben.

| | **Rohstoff** | **Funktion** | **Gew. Teile** |
|---|---|---|---|
| Dispersion 1 (Vergleich.) | Dispercoll^{®} U 53 | Polymer-Dispersion | 100 |
| | Vernetzer 1 | Feststoff-Isocyanat-Suspension | 20 |
| | | | |

| | **Rohstoff** | **Funktion** | **Gew. Teile** |
|---|---|---|---|
| Dispersion 2 (Vergleich.) | Dispercoll^{®}U 53 | Polymer-Dispersion | 100 |
| | Vernetzer 2 | Feststoff-Isocyanat-Suspension | 20 |
| Dispersion 3 | Dispercoll^{®} U 53 | Polymer-Dispersion | 100 |
| | Vernetzer 3 | Feststoff-Isocyanat-Suspension | 20 |
| | | | |

| | **Rohstoff** | **Funktion** | **Gew. Teile** |
|---|---|---|---|
| Dispersion 4 | Dispercoll U^{®} 53 | Polymer-Dispersion | 100 |
| | Vernetzer 4 | Feststoff-Isocyanat-Suspension | 20 |
| | | | |

| | **Rohstoff** | **Funktion** | **Gew. Teile** |
|---|---|---|---|
| Dispersion 5 | Dispercoll^{®} U 53 | Polymer-Dispersion | 100 |
| | Vernetzer 5 | Feststoff-Isocyanat-Suspension | 20 |
| | | | |

| | **Rohstoff** | **Funktion** | **Gew. Teile** |
|---|---|---|---|
| Dispersion 6 | Dispercoll^{®} U 53 | Polymer-Dispersion | 100 |
| | Vernetzer 6 | Feststoff-Isocyanat-Suspension | 20 |

Dispersion 1 und 2 sind Vergleichsbeispiele ohne Katalysator. Die Beispiele 3 bis 6 sind erfindungsgemäß.

### Prüfung der Wirkung der Katalysatoren auf die Reaktivität von latent-reaktiven Vorbeschichtung

Die Polymerdispersionen Beispiel 1 - 6 wurden mit einem 200µm Rakel auf Buchenholz-Prüfkörper (Abmessung der Prüfkörper: 50mm x 140mm; 4 mm dick) auf eine Fläche von 50mm x 110mm aufgetragen und 1 Std. bei 23°C getrocknet. Nach weiteren 3 Std. wurde eine PVC-Folie (Lieferant: Fa. Benecke) bei 80°C und 100°C (Pressentemperatur) und 4 bar Druck über 5 min. 10 min., 15 min., 30 min. und 60 min. auf die Klebstoffschicht aufkaschiert. Unmittelbar nach Entnahme der Buchenholz / PVC-Klebung aus der Presse wurden die Verbunde in einen auf 80°C temperierten Wärmeschrank eingehängt und 3 min. temperiert. Danach wurden jeweils 2,5 kg Gewichte an eine PVC-Folien angehängt und über einen Zeitraum von 5 min. die Klebeverbindung im Schälversuch (180° Winkel) bei 80°C belastet.

Als Nachweis der Vernetzungsreaktion kann die innerhalb des Prüfzeitraums von 5 min. abgeschälte Strecke herangezogen werden. Der abgeschälte Strecke wird in mm/min. umgerechnet. Je kleiner der Wert, desto schneller die Vernetzungsreaktion bzw. desto aktiver der Katalysator.

| | Abgeschälte Strecke [mm/min.] | | | | | |
|---|---|---|---|---|---|---|
| Temperatur der Presse 80°C | Dispersion 1 (Vergleich) | Dispersion 2 (Vergleich) | Dispersion 3 | Dispersion 4 | Dispersion 5 | Dispersion 6 |
| 5 min. | > 20 | > 20 | > 20 | > 20 | 8 | 12 |
| 10 min. | > 20 | > 20 | > 20 | 8 | 7 | 7 |
| 15 min. | > 20 | > 20 | > 20 | 6 | 7 | 6 |
| 30 min. | > 20 | > 20 | 1 | 1 | 4 | 1 |
| 60 min | 10 | 8 | - | - | - | - |

| | Abgeschälte Strecke [mm/min.] | | | | | |
|---|---|---|---|---|---|---|
| Temperatur der Presse 100°C | Dispersion 1 (Vergleich) | Dispersion 2 (Vergleich) | Dispersion 3 | Dispersion 4 | Dispersion 5 | Dispersion 6 |
| 5 min. | > 20 | > 20 | > 20 | > 20 | 6 | 10 |
| 10 min. | > 20 | > 20 | 1 | 1 | 4 | 1 |
| 15 min. | > 20 | 18 | - | - | - | - |
| 30 min. | 15 | 1 | - | - | - | - |
| 60 min | 1 | - | - | - | - | - |

Bewertung: Die Katalysatoren Lithiummolybdat, Zinkmolybdat und Lithiumothovanadat führen in den latent-reaktiven Vorbeschichtungen zu einer beschleunigten Vernetzung. Die erfindungsgemäßen Dispersion 3 - 6 sind bei 80°C Pressentemperatur bereits nach 30 min. (Vergleich Dispersion 1 und 2 = > 60 min.) und bei 100°C Pressentemperatur nach <10 min. (Vergleich Dispersion 1 und 2 = > 15 min) vernetzt.

(Hinweis: Bei einem Wert < 5 mm/min. gilt die Klebstoffschicht als vemetzt; - bedeutet: weitere Messungen sind nicht sinnvoll)

### Wirkung der Katalysatoren in latent-reaktiven Klebstoff-Pulvern

Herstellung von latent-reaktiven Pulver:
Die Dispersionen 2 (Vergleich) und 4 (erfindungsgemäß) wurden 24 Std. bei -5°C in einem Tiefkühlschrank gelagert. Dabei fiel das Polymer in Form von groben festen Partikeln aus. Die Formulierung wurde auf Raumtemperatur erwärmt und das ausgefällte Polymer durch Filtration vom Serum getrennt. Das Polymer wurde anschließend schonend getrocknet und in einer Strahlmühle unter Kühlung auf eine Partikelgröße von d50 ca. 100 µm gemahlen.

### Prüfung

2,4g der Pulver wurden gleichmäßig auf eine Fläche von 14cm x 24cm Baumwoll / Polyester - Mischgewebe aufgestreut (entspricht ca. 70g/m²). Das Baumwoll / Polyester -Mischgewebe wurde danach in einer Membranpresse bei 80°C Pressentemperatur und einem Druck von 1 bar über 2 min. gegen ein nicht beschichtetes Polyestergewebe verpresst. Die Klebeverbindung wurden 24 Std. im Normklima (23°C 50% r.h.) gelagert und anschließend im Zeitstandversuch geprüft.

### Zeitstandversuch

Für den Zeitstandversuch wurden die Textilklebungen zunächst ohne Gewichtsbelastung in den auf 60°C temperierten Wärmeschrank eingehängt und 30 min. temperiert. Anschließend wurden die Klebeverbindung (180° Schälversuch) mit einem 50g Gewicht belastet und weitere 30 min. bei 60°C belassen. Nach Ablauf der 30 minütigen Prüfung wurde die abgeschälte Strecke [mm] bestimmt. Anschließend erfolgte jeweils alle 30 Minuten eine Temperaturerhöhung um 10°C. Nach Ablauf jeder Temperaturstufe wurde die abgeschälte Strecke bestimmt.

| | Abgeschälte Strecke [mm] / Temperaturstufe | |
|---|---|---|
| Prüftemperatur | Pulver aus Dispersion 2 (Vergleich) | Pulver aus Dispersion 4 (erfindungsgemäß) |
| 60°C | 2 | 0 |
| 70°C | 5 | 0 |
| 80°C | 10 | 0 |
| 90°C | 13 | 0 |
| 100°C | vollständig abgeschält | 0 |
| 110°C | - | 0 |
| 120°C | - | 0 |
| 130°C | - | 0 |
| 140°C | - | 0 |
| 150°C | - | 0 |

Die beschleunigte Vernetzung des latent-reaktiven Pulvers mit dem Lithiummolybdat wird hier durch die geringe Abschälstrecke bis zu einer Temperatur von 150°C sichtbar. Die Klebeverbindung mit dem Pulver ohne Lithiummolybat ist bereits bei 100°C vollständig getrennt.

## Patentansprüche

1. Wässrige Zubereitungen enthaltend
a) dispergierte Polymere mit isocyanat-reaktiven Gruppen
b) wenigstens ein dispergiertes oberflächendesaktiviertes aliphatisches Feststoff-Polyisocyanate mit einer Erweichungstemperatur ≥ 40°C
c) eine oder mehrere Verbindungen von Elementen der 5. und 6. Nebengruppe des Periodensystems, in denen das jeweilige Element eine Oxidationsstufe von mindestens +4 hat,
d) gegebenenfalls weitere Zusatzstoffe und Hilfsmittel.

2. Zubereitung gemäß Anspruch 1, **dadurch gekennzeichnet, dass** das dispergierte isocyanatreaktive Polymer Urethan- und Harnstoff-Gruppen enthält.

3. Zubereitung nach Anspruch 1, **dadurch gekennzeichnet, dass** das isocyanat-reaktive Polymer kristallisierende Polymereinheiten besitzt.

4. Zubereitung nach Anspruch 1, **dadurch gekennzeichnet, dass** das isocyanat-reaktive Polymer kristallisierende Polyesterweichsegmente als kristallisierende Polymereinheiten besitzt.

5. Zubereitung nach Anspruch 1, **dadurch gekennzeichnet, dass** die aliphatischen Feststoff Isocyanate eine Partikelgröße von d 50 < 100 µm aufweisen.

6. Zubereitung nach Anspruch 1, **dadurch gekennzeichnet, dass** die aliphatischen Feststoff-Isocyanate eine Partikelgröße von d 50 < 2 µm aufweisen.

7. Zubereitung nach Anspruch 1, **dadurch gekennzeichnet, dass** die aliphatischen Feststoff-Isocyanat IPDI-Trimer ist.

8. Zubereitung nach Anspruch 1, **dadurch gekennzeichnet, dass** als Komponente (c) mindestens eine Verbindung der Elemente Molybdän und Vanadin eingesetzt werden.

9. Zubereitung nach Anspruch 1, **dadurch gekennzeichnet, dass** als Komponente (c) mindestens eine Verbindung des Elements Molybdän eingesetzt wird.

10. Zubereitung nach Anspruch 1, **dadurch gekennzeichnet, dass** als Komponente (c) Lithiummolybdat eingesetzt wird.

11. Verfahren zur Herstellung von Zubereitungen nach den Ansprüchen 1-10, **dadurch gekennzeichnet, dass** die Komponente (c) in der Wasserphase des dispergierten Polymers (a) befindlich eingebracht wird.

12. Verfahren zur Herstellung von Zubereitungen nach den Ansprüchen 1-10, **dadurch gekennzeichnet, dass** die Komponente (c) in der Formulierung des aliphatischen Feststoff-Isocyanats (b) befindlich eingebracht wird.

13. Verfahren zur Herstellung von Zubereitungen nach den Ansprüchen 1-10, **dadurch gekennzeichnet, dass** die Komponente (c) in weiteren Additiven und Hilfsstoffen (d) befindlich eingebracht wird.

14. Verfahren zur Herstellung von Zubereitungen nach den Ansprüchen 1-10, **dadurch gekennzeichnet, dass** die Komponente (c) in der wässrigen Phase der Formulierung bestehend aus dem dispergierten Polymer (a), dem oberflächendeaktivierten aliphatischen Feststoff-Isocyanat (b) und ggf. zugesetzten Additvien und Hilfstoffen befindlich eingebracht wird.

15. Verwendung von Zubereitungen nach Ansprüchen 1-10 als Klebstoff.

16. Verwendung von Zubereitungen nach Ansprüchen 1-10 zur Herstellung von trägerfreien Filmen und Vliesen.

17. Verwendung von Zubereitungen nach Ansprüchen 1-10 zur Herstellung von Klebstoffpulvern.

## Claims

1. Aqueous preparations comprising
a) dispersed polymers having isocyanate-reactive groups
b) at least one dispersed, surface-deactivated, solid-state aliphatic polyisocyanate having a softening temperature ≥ 40°C
c) one or more compounds of elements from transition groups 5 and 6 of the Periodic Table, in which the respective element has an oxidation state of at least +4,
d) optionally further additives and auxiliaries.

2. Preparation of Claim 1, **characterized in that** the dispersed isocyanate-reactive polymer contains urethane groups and urea groups.

3. Preparation of Claim 1, **characterized in that** the isocyanate-reactive polymer possesses crystallizing polymer units.

4. Preparation of Claim 1, **characterized in that** the isocyanate-reactive polymer possesses crystallizing soft polyester segments as crystallizing polymer units.

5. Preparation of Claim 1, **characterized in that** the solid-state aliphatic isocyanates have a particle size of d 50 < 100 µm.

6. Preparation of Claim 1, **characterized in that** the solid-state aliphatic isocyanates have a particle size of d 50 < 2 µm.

7. Preparation of Claim 1, **characterized in that** the solid-state aliphatic isocyanate is IPDI trimer.

8. Preparation of Claim 1, **characterized in that** at least one compound of the elements molybdenum and vanadium are used as component (c).

9. Preparation of Claim 1, **characterized in that** at least one compound of the element molybdenum is used as component (c).

10. Preparation of Claim 1, **characterized in that** lithium molybdate is used as component (c).

11. Process for preparing preparations of Claims 1-10, **characterized in that** component (c) is introduced in the water phase of the dispersed polymer (a).

12. Process for preparing preparations of Claims 1-10, **characterized in that** component (c) is introduced in the formulation of the solid-state aliphatic isocyanate (b).

13. Process for preparing preparations of Claims 1-10, **characterized in that** component (c) is introduced in further additives and auxiliaries (d).

14. Process for preparing preparations of Claims 1-10, **characterized in that** component (c) is introduced in the aqueous phase of the formulation consisting of the dispersed polymer (a), the surface-deactivated, solid-state aliphatic isocyanate (b) and optionally added additives and auxiliaries.

15. Use of preparations of Claims 1-10 as adhesive.

16. Use of preparations of Claims 1-10 for producing support-free films and nonwovens.

17. Use of preparations of Claims 1-10 for producing adhesive powders.

## Revendications

1. Dispersions aqueuses contenant
a) des polymères dispersés comportant des groupes réactifs vis-à-vis des isocyanates,
b) au moins un polyisocyanate solide aliphatique dispersé, désactivé en surface, ayant une température de ramollissement ≥ 40°C,
c) un ou plusieurs composés d'éléments du 5^{ème} et du 6^{ème} groupes secondaires du tableau périodique, chacun des éléments ayant un degré d'oxydation d'au moins +4,
d) éventuellement, d'autres additifs et adjuvants.

2. Préparation selon la revendication 1, **caractérisée en ce que** le polymère dispersé réactif vis-à-vis des isocyanates contient des groupes uréthanne et urée.

3. Préparation selon la revendication 1, **caractérisée en ce que** le polymère réactif vis-à-vis des isocyanates possède des motifs polymères cristallisables.

4. Préparation selon la revendication 1, **caractérisée en ce que** le polymère réactif vis-à-vis des isocyanates possède des segments mous cristallisables de polyester servant de motifs polymères cristallisables.

5. Préparation selon la revendication 1, **caractérisée en ce que** les isocyanates solides aliphatiques ont une granulométrie d50 < 100 µm.

6. Préparation selon la revendication 1, **caractérisée en ce que** les isocyanates solides aliphatiques ont une granulométrie d50 < 2 µm.

7. Préparation selon la revendication 1, **caractérisée en ce que** l'isocyanate solide aliphatique est un IPDI trimère.

8. Préparation selon la revendication 1, **caractérisée en ce qu'**on utilise en tant que composant (c) au moins un composé des éléments molybdène et vanadium.

9. Préparation selon la revendication 1, **caractérisée en ce qu'**on utilise en tant que composant (c) au moins un composé de l'élément molybdène.

10. Préparation selon la revendication 1, **caractérisée en ce qu'**on utilise en tant que composant (c) du molybdate de lithium.

11. Procédé de fabrication de préparations selon les revendications 1 à 10, **caractérisé en ce que** le composant (c) est introduit en étant présent dans la phase aqueuse du polymère dispersé (a).

12. Procédé de fabrication de préparations selon les revendications 1 à 10, **caractérisé en ce que** le composant (c) est introduit en étant présent dans la formulation de l'isocyanate solide aliphatique (b).

13. Procédé de fabrication de préparations selon les revendications 1 à 10, **caractérisé en ce que** le composant (c) est introduit en étant présent dans d'autres additifs et adjuvants (d).

14. Procédé de fabrication de préparations selon les revendications 1 à 10, **caractérisé en ce que** le composant (c) est introduit en étant présent dans la phase aqueuse de la formulation consistant en le polymère dispersé (a), l'isocyanate solide aliphatique désactivé en surface (b) et éventuellement les additifs et adjuvants ajoutés.

15. Utilisation de préparations selon les revendications 1 à 10 en tant qu'adhésif.

16. Utilisation de préparations selon les revendications 1 à 10, pour la fabrication de films et de voiles sans support.

17. Utilisation de préparations selon les revendications 1 à 10 pour fabriquer des poudres adhésives.
